# EUROPEAN PATENT APPLICATION

(11) **EP 2 708 789 A1**
(43) Date of publication of application: **19.03.2014**
(21) Application number: 11865066.2
(22) Date of filing: 10.05.2011
(51) Int. Cl.: F16L 33/00, F16L 9/06, F16L 33/28

(54) **HELICALLY CORRUGATED SYNTHETIC RESIN PIPE WITH JOINT, AND STRUCTURE FOR CONNECTING HELICALLY CORRUGATED SYNTHETIC RESIN PIPES**

(71) Applicant: Kanaflex Corporation, Osaka-shi, Osaka 530-6017 (JP)
(72) Inventor: KANAO, Shigeki, Nishinomiya-shi Hyogo 662-0002 (JP)
(74) Representative: Müller-Boré & Partner Patentanwälte PartG mbB
(86) International application number: PCT/JP2011/060783
(87) International publication number: WO 2012/153397

(57) **Abstract**

There are provided a spirally waved synthetic resin conduit provided with a coupling and a connection structure for such a spirally waved synthetic resin conduit. The synthetic resin conduit is simply configured by a small number of components, has sufficient water and pressure resistances as well as excellent sealing properties with no need for any rigid material or high accuracy, achieves the reduction in weight and cost, and is easily handled with facilitated connection work on site. In such a spirally waved synthetic resin conduit provided with a coupling, which includes a receiver opening 4 provided at an end of the conduit and connected to another spirally waved synthetic resin conduit, the receiver opening 4 is formed with a foamable resin into a cylindrical shape so as to extend from the end of the spirally waved synthetic resin conduit in an axial direction of the conduit, and an FRP layer 8a is formed by impregnating reinforcing fibers with a resin, at least on an outer peripheral surface of the formed receiver opening at a connection end.

## Description

### TECHNICAL FIELD

The present invention relates to a spirally waved synthetic resin conduit, which has a conduit wall in a spirally waved shape and is utilized for an exhaust water pipe laid below a road, a large exhaust water pipe for a sewer, or the like. The present invention also relates to a connection structure for the spirally waved synthetic resin conduit.

### BACKGROUND ART

Conventionally, there have been generally used concrete Hume pipes as exhaust water pipes laid below roads and exhaust water pipes for sewers. However, in recent years, there have been used waved synthetic resin conduits that have strength of a same level or higher than that of a Hume pipe and are useful in terms of durability, reduction in weight, easier application, and the like. More specifically, such a conduit has a reinforcing convex portion provided into a spiral shape on an outer periphery of a main body that has a substantially smooth inner surface.

Upon connecting such waved synthetic resin conduits to each other, the following structure is adopted. Specifically, there are provided, at ends of the conduits facing each other, halved couplings that each have a connection flange and a packing sheet being placed on an inner surface. A gap between a waterproof block and a concave portion is filled with a calking compound. The packing sheet is wound around the conduits while being sufficiently stretched, and is fixed by means of a vinyl tape or the like. The other halved coupling is then attached from above, and the flanges of the respective halved couplings are fastened and fixed by means of bolts and nuts.

However, with the above connection structure, the upper and lower paired halved couplings, the packing sheets, the calking compound, and the like need assembled on site in accordance with the connection processes. Thus, it requires quite time and tasks with poor work efficiency. Furthermore, the large number of components complicates the management tasks. In particular, it is quite troublesome for a worker who places the packing sheets on the inner surfaces of the halved couplings and then shifts the two conduits to specific positions on the packing sheets. Moreover, the states of the filled calking compound and the stretched packing sheets on site are varied depending on individual workers, which causes variations in quality.

In contrast, there has been proposed a connection structure that facilitates the connection work and reduces the work time. In this structure, waved synthetic resin conduits each have an end provided with a connection flange by welding, and a packing member is provided between contact surfaces of the flanges, which are fastened by means of bolts and nuts (see Patent Document 1, for example). Such a connection structure improves the workability in comparison to the conventional halved couplings, thereby achieving higher reliability.

However, these connection flanges require the connection work by means of bolts and nuts, which deteriorates the work efficiency. Further, leaking may occur unless the flange is welded to the end of each conduit securely and watertightly. Deformation or the like of a surface of each flange will also cause leaking. Accordingly, excellent quality will be necessary in the attachment state, as well as strength, shapes, and dimensions of the flanges themselves, which limits the reduction in cost. Moreover, such rigid flanges as well as the bolts and the nuts used to connect these flanges to each other inevitably increase the weight at the connected portion. Because the surfaces of the flanges are connected to each other with the packing member being interposed therebetween, the outward water and pressure resistances at this portion are limited. Moreover, the bolts and the nuts are required to be evenly fastened to each other. Accordingly, there is also limitation on the improvement in work efficiency.

Furthermore, most of large synthetic resin conduits of this type each have an inner diameter of at least 1000 mm and a length of approximately 5 m. Such large and long conduits need to be carefully handled upon landing, unloading, and the like. If these conduits are dropped, ends of the conduits will be damaged, which is a problematic disadvantage.

### PRIOR ART DOCUMENT

### PATENT DOCUMENT

Patent Document 1: Japanese Unexamined Patent Publication No. 2002-139178

### SUMMARY OF THE INVENTION

### PROBLEMS TO BE SOLVED BY THE INVENTION

In view of the circumstances described above, the present invention was achieved to solve the above problems and provides a spirally waved synthetic resin conduit provided with a coupling. Specifically, the synthetic resin conduit is simply configured with a small number of components, has sufficient water and pressure resistances as well as excellent sealing properties with no need for any rigid material or high accuracy, achieves the reduction in weight and cost, and is easily handled with facilitated connection work on site. The present invention also provides a connection structure for such a spirally waved synthetic resin conduit.

### SOLUTIONS TO THE PROBLEMS

The present invention includes (a) a first mode relating to a spirally waved synthetic resin conduit provided with a coupling, and (b) a second mode relating to a connection structure between such spirally waved synthetic resin conduits each provided with a coupling.

### a) First mode of the present invention

In accordance with an aspect of the present invention, a spirally waved synthetic resin conduit, provided with a coupling, comprises a receiver opening provided at an end of the conduit and connected to another spirally waved synthetic resin conduit, wherein the receiver opening is formed with a foamable resin into a cylindrical shape so as to extend from the end of the spirally waved synthetic resin conduit in an axial direction of the conduit, and an FRP layer is formed by impregnating reinforcing fibers with a resin, at least on an outer peripheral surface of the formed receiver opening at an connection end.

In the present invention, the FRP layer can be obtained with a plurality of layers.

In the present invention, the FRP layer is preferably provided further on an end surface of the receiver opening.

In the present invention, a reinforcing member is preferably provided at the receiver opening.

In the present invention, as the reinforcing member, a spirally waved synthetic resin conduit component having an inner diameter larger than an outer diameter of the spirally waved conduit is preferably embedded coaxially with the spirally waved synthetic resin conduit.

In the present invention, as the reinforcing member, a spirally waved synthetic resin conduit component having an inner diameter larger than an outer diameter of the spirally waved conduit is preferably embedded coaxially with the spirally waved synthetic resin conduit, with an outer peripheral surface thereof being partially exposed.

In the present invention, as the reinforcing member, a circular conduit component having an inner diameter larger than an outer diameter of the spirally waved conduit is preferably embedded coaxially with the spirally waved synthetic resin conduit.

In the present invention, as the reinforcing member, reinforcing fiber chips are preferably embedded so as to be dispersed.

In the present invention, as the reinforcing member, a circular conduit component having an inner diameter larger than an outer diameter of the spirally waved conduit is preferably embedded coaxially with the spirally waved synthetic resin conduit, and reinforcing fiber chips are preferably embedded so as to be dispersed.

In the present invention, the reinforcing fibers are preferably provided as a chopped strand mat, a plain woven glass cloth, etc. obtained by forming glass fibers into a tape or sheet shape.

In the present invention, the spirally waved portion is preferably configured by stacking a steel plate formed spirally to have a convex shape in cross section and a synthetic resin coating the steel plate.

### b) Second mode of the present invention

In accordance with an aspect of the present invention, a connection structure between the spirally waved synthetic resin conduit, provided with a coupling, comprises above composition and a spirally waved synthetic resin conduit including an inserted opening configured to be inserted into the receiver opening of the spirally waved synthetic resin conduit provided with a coupling, wherein the inserted opening is substantially same in length as the receiver opening extending in the axial direction of the conduit, and has a smooth outer peripheral surface so as to be engaged with the receiver opening.

In the present invention, the inserted opening is preferably formed to have the smooth outer peripheral surface by winding a belt-shaped resin having a convex shape in cross section along a spiral concave groove that is provided in the spirally waved synthetic resin conduit at a connection end, so as to be engaged with the spiral concave groove.

In the present invention, the inserted opening is preferably formed to have the smooth outer peripheral surface by filling a foamable resin in a spiral concave groove that is provided in the spirally waved synthetic resin conduit at a connection end.

In the present invention, at least the outer peripheral surface of the inserted opening at a connection end is preferably provided with an FRP layer by impregnating reinforcing fibers with a resin.

In the present invention, the FRP layer is preferably provided further on an end surface of the inserted opening.

In the present invention, the reinforcing fibers are preferably provided as a chopped strand mat, a plain woven glass cloth, etc. obtained by forming glass fibers into a tape or sheet shape.

In the present invention, a circular conduit component having an inner diameter larger than an outer diameter of the spirally waved conduit is preferably embedded in the inserted opening so as to be coaxial with the spirally waved synthetic resin conduit.

In the present invention, reinforcing fiber chips are preferably embedded so as to be dispersed in the inserted opening.

In the present invention, a circular conduit component having an inner diameter larger than an outer diameter of the spirally waved conduit is preferably embedded in the inserted opening so as to be coaxial with the spirally waved synthetic resin conduit, and reinforcing fiber chips are embedded so as to be dispersed in the inserted opening.

In the present invention, a sealing member is preferably provided at the inserted opening so as to seal a gap between the inserted opening and the receiver opening.

### EFFECTS OF THE INVENTION

According to the present invention, the connection work can be facilitated by simply fitting the inserted opening provided at one of the spirally waved synthetic resin conduits with the cylindrical receiver opening extended from the end of the other one of the spirally waved synthetic resin conduits. Therefore, there is no need to evenly fasten by means of bolts and nuts as in conventional conduits each provided with a connection flange, resulting in improved work efficiency.

Further, in the fitting structure between the inserted opening and the receiver opening, the receiver opening securely surrounds the inserted opening. This structure thus exerts sufficient water and pressure resistances as well as excellent sealing properties with no need for any rigid material or high accuracy. Therefore, the reduction in weight and cost is realized and the manufacturing work is facilitated, in comparison to the conventional work of watertightly and accurately attaching the connection flanges.

At least the outer peripheral surface of the receiver opening at the connection end is provided with the FRP layer by impregnating reinforcing fibers with a resin. Therefore, even when the spirally waved synthetic resin conduit is unloaded on site under bad ground conditions and the conduit is dropped, the end of the spirally waved synthetic resin conduit can be protected from damages and deformation.

With the receiver opening configured to have the reinforcing member in the foamable resin, the strength of the receiver opening can be enhanced and the reduction in weight and cost can be also achieved.

In particular, the conduit including the spirally waved synthetic resin conduit component or the circular conduit component as the reinforcing member improves the strength at the receiver opening and achieves enhanced water and pressure resistances.

When the spirally waved synthetic resin conduit is provided with the spirally waved synthetic resin conduit component so as to be partially exposed, the reduction in weight and material cost can be realized. Furthermore, the outer surface has the appearance same as that of the conduit wall of the spirally waved synthetic resin conduit, which enhances the degree of integration of the entire conduit, resulting in the improvement of the quality in outer appearance.

### BRIEF DESCRIPTION OF THE DRAWINGS

Fig. 1 is a general view showing a connection state between spirally waved synthetic resin conduits each provided with a coupling according to the present invention.
Fig. 2 is an enlarged sectional view of a connected portion in Fig. 1.
Fig. 3(a) is a sectional view showing a main portion of a conduit wall of the spirally waved synthetic resin conduit, and Fig. 3(b) is a sectional view showing a main portion of a conduit wall according to a modified example.
Fig. 4 is a view corresponding to Fig. 2, showing a receiver opening according to a modified example.
Fig. 5 is a view corresponding to Fig. 1, showing spirally waved synthetic resin conduits each provided with a coupling according to a second embodiment of the present invention.
Fig. 6 is an enlarged sectional view of a connected portion in Fig. 5.
Fig. 7 is a view corresponding to Fig. 2, showing spirally waved synthetic resin conduits each provided with a coupling according to a third embodiment of the present invention.
Fig. 8 is a view corresponding to Fig. 2, showing an inserted opening according to a modified example.
Fig. 9 is a view corresponding to Fig. 2, showing a receiver opening and an inserted opening according to another modified example.
Fig. 10 is a view corresponding to Fig. 2, showing a receiver opening and an inserted opening according to still another modified example.
Fig. 11 is a view corresponding to Fig. 2, showing spirally waved synthetic resin conduits each provided with a coupling according to a fourth embodiment of the present invention.
Fig. 12 is a general view of the spirally waved synthetic resin conduit provided with a coupling in Fig. 11.
Fig. 13 is an enlarged sectional view of a connected portion in Fig. 11.
Fig. 14 is an explanatory view of a method for manufacturing a spirally waved synthetic resin conduit.
Fig. 15 is a view corresponding to Fig. 2, showing a conduit member configuring a receiver opening according to a different example.
Fig. 16 is a flowchart showing processes of manufacturing a spirally waved synthetic resin conduit according to the present invention.
Fig. 17(a) is an explanatory view showing a cracked state of a spirally waved synthetic resin conduit that is provided with a coupling but does not have an FRP layer, and Fig. 17(b) is an enlarged view of a main portion in Fig. 17(a).
Fig. 18(a) is an explanatory view showing a state, after a drop test, of a spirally waved synthetic resin conduit provided with a coupling according to the present invention, and Fig. 18(b) is an enlarged view of a main portion in Fig. 18(a).

### MODES FOR CARRYING OUT THE INVENTION

Described below in detail with reference to the drawings is a spirally waved synthetic resin conduit and a connection structure therefor, according to the present invention.

It is noted that the applicant of the present invention has already filed Japanese Patent Application No. 2009-53266 (not published) as a related application, which is characterized in reinforcement of an entire receiver opening. To the contrary, the present invention is characterized in protection of an outer surface of a receiver opening from damages independently from reinforcement of the entire receiver opening.

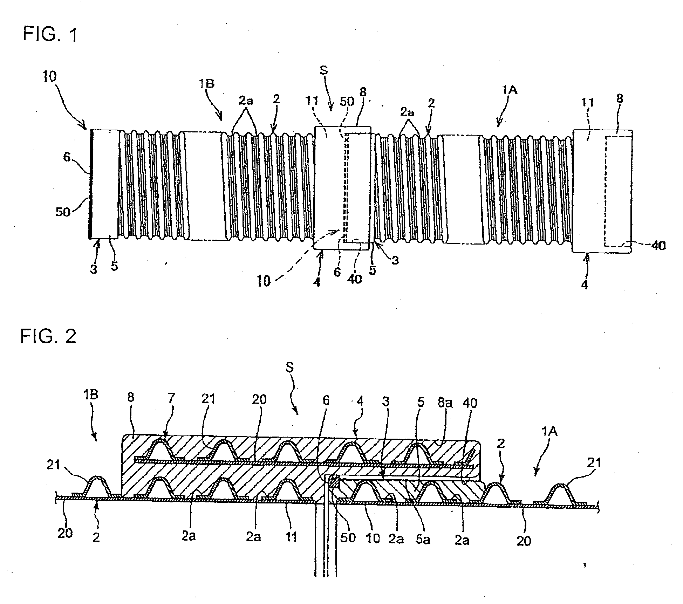

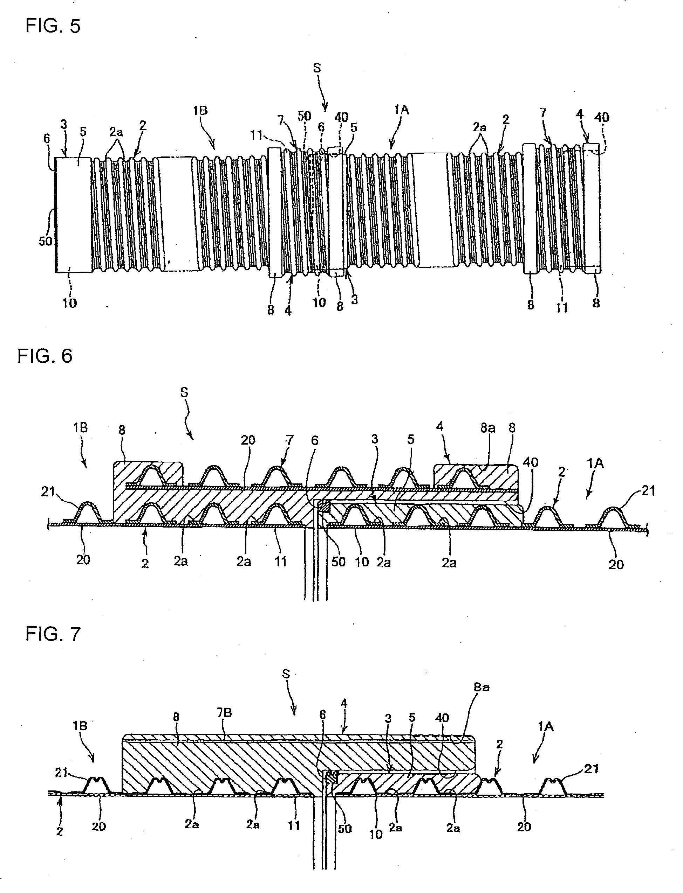

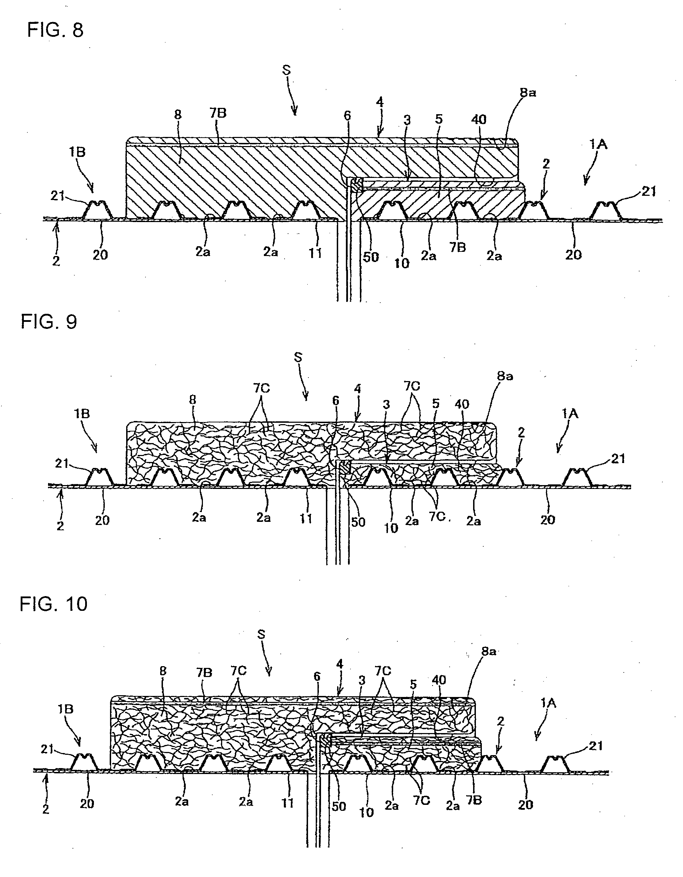

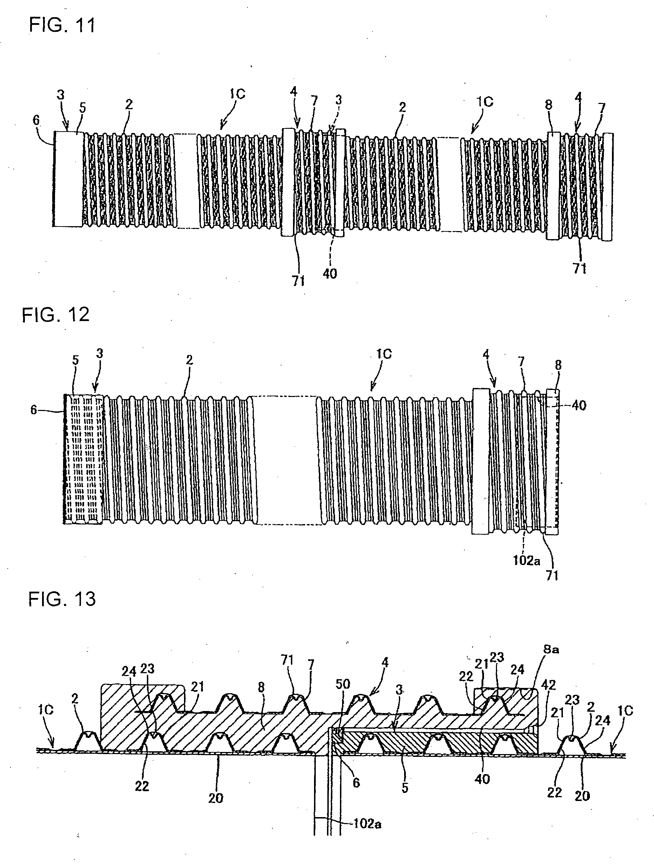

Fig. 1 is an explanatory view showing a connection structure S between spirally waved synthetic resin conduits 1A and 1B according to the present invention. Figs. 1 to 4 each show a first embodiment, Figs. 5 and 6 each show a second embodiment, Figs. 7 and 8 each show a third embodiment, and Figs. 11 to 16 each show a fourth embodiment of the present invention. In these figures, symbols 1A, 1B, and 1C each denote a spirally waved synthetic resin conduit, symbol 2 denotes a conduit wall, symbol 3 denotes an inserted opening, and symbol 4 denotes a receiver opening, respectively.

As shown in Figs, 1 and 2, in the connection structure S between the spirally waved synthetic resin conduits of the present invention, ends of the two spirally waved synthetic resin conduits 1A and 1B each having the conduit wall 2 in a spirally waved shape are connected to each other.

In the present embodiment, the spirally waved synthetic resin conduits 1A and 1B are each identically configured to have the inserted opening 3 at a first end 10 (left end in the figure) and the receiver opening 4 at a second end 11 (right end in the figure). However, the present invention is not necessarily limited to the connection structure for a conduit having such two ends. The connection structure of the present invention can be established as long as at least the ends facing each other of the two conduits have the inserted opening 3 and the receiver opening 4, respectively, and the remaining ends not facing each other of the two conduits may not have a receiver opening or an inserted opening.

Initially, a first embodiment is described with reference to Figs. 1 to 4.

### 1. First Embodiment

The conduit wall 2 of each of the spirally waved synthetic resin conduits 1A and 1B is formed into a spirally waved shape. As shown also in Fig. 2, the first end 10 (left end in the figure) of each of the conduits is provided with the cylindrical inserted opening 3 by coating, with a synthetic resin layer, at least concave portions 2a that configure the waved shape on the outer surface of the first end 10. On the other hand, the second end 11 (right end in the figure) is provided with the cylindrical receiver opening 4 made of a synthetic resin, which coats the outer surface of the second end 11 and is extended axially outward (in the right direction in the figure).

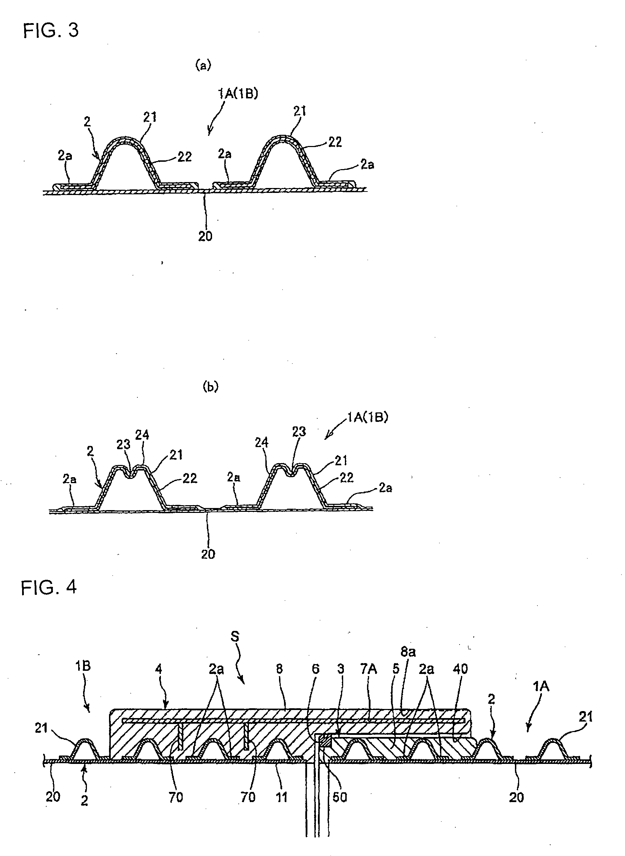

As shown in Fig. 3(a), the conduit wall 2 of each of the conduits is waved by continuously providing raised portions and recessed portions each of which has a substantially triangular shape, a substantially arc shape, or a trapezoidal shape. Each part including a recessed portion between adjacent raised portions configures the concave portion 2a.

In the present example, a synthetic resin main body 20 having a substantially smooth inner surface is provided, on the outer periphery thereof, with a spirally placed reinforcing convex portion 21 that has a substantially triangular shape or a substantially arc shape and is made of a resin compact incorporating a steel member (steel plate having a convex shape in cross section) 22 (such as a coated steel plate). The main body 20 and the reinforcing convex portion 21 configuring the raised portions can be efficiently obtained by melting and extruding a partial compact of the main body 20 and spirally winding on a rotary shaft so as to be sequentially welded, and simultaneously supplying the reinforcing convex portion 21 on the partial compact also into a spiral shape to integrate together.

Alternatively, the reinforcing convex portion 21 configuring the raised portions may be made only of a resin layer, without incorporating the steel member 22. The shape of each of the raised portions and the recessed portions is not particularly limited, but may be in a substantially V-letter shape, a substantially U-letter shape, a substantially circular shape, a substantially elliptical shape, a substantially rectangular shape, a polygonal shape, an irregular shape, or any other shape.

Further, in the present example, the main body 20 is provided on the inner peripheries of the raised portions so as to be extended from the recessed portions. Therefore, the inner surface of the conduit is formed into a smooth shape by the main body 20. Alternatively, the main body 20 may not be provided and the reinforcing convex portion 21 may be provided continuously, so that the inner surface is formed uneven into a spirally waved shape.

Still alternatively, as shown in Fig. 3(b), it is a preferred example in which a recess 23 is provided at the top of each of the raised portions. The recess 23 thus provided disperses pressure (pressure by soil or the like) applied to each of the raised portions, which increases strength and rigidity of the raised portions, as well as the pressure resistance of the entire conduit wall 2. Provision of these recesses 23 may easily lead to leaking of a fluid in a conventional conduit connection structure. However, in a case of adopting the connection structure of the present invention, even conduits provided with such recesses 23 can be connected to each other without any leaking. In the example shown in Fig. 3(b), the outer surface of the reinforcing convex portion 21, which is made of a coated steel plate and has a substantially M-letter shape, is further coated with an outer surface layer 24.

The raised portions and the recessed portions of the conduit wall 2, more specifically, the main body 20, the reinforcing convex portion 21, and the outer surface layer 24 are each made of a synthetic resin material selected from a wide variety of synthetic resins of polyolefin series such as polyethylene and polypropylene, of vinyl chloride series, and the like. Other than the above, a synthetic rubber or a soft resin can be used.

As shown in Fig. 2, the inserted opening 3, which is provided at the first end 10 of each of the spirally waved synthetic resin conduits 1A and 1B, is coated with a synthetic resin layer 5 and has the outer surface in a substantially smooth cylindrical shape in the axial direction because at least the concave portions 2a shaping the waved outer surface of the first end 10 are filled with the synthetic resin layer 5. Accordingly, the inserted opening 3 is shaped to be in close contact with the inner peripheral surface of the receiver opening 4, which is to be described later. In the present example, this synthetic resin layer 5 is formed such that the first end 10 is surrounded with a molding tool and a synthetic resin material is injected thereinto and cured. However, the present invention is not limited to this case. Alternatively, the synthetic resin layer 5 can be separately formed and be attached to the end 10 to be integrated by heat sealing or the like. The synthetic resin layer 5 can be attached by any other method.

Still alternatively, the first end 10 is pressurized and deformed so as to be reduced in diameter, and the reinforcing convex portion 21 is crushed to be reduced in diameter such that each of the concave portions 2a secures a predetermined depth. The synthetic resin layer 5 coats from above, the crushed reinforcing convex portion 21, so that the inserted opening 3 can be made smaller in diameter than the conduit wall 2. In this configuration, the receiver opening 4 provided at the second end 11 is also made smaller in size, which results in reduction in size of the entire connected portion configured by the inserted opening 3 and the receiver opening 4.

The synthetic resin material for the synthetic resin layer 5 may be foamed or non-foamed, and examples of such synthetic resins include olefinic resins such as polyethylene resin and polypropylene resin. Examples of foamed synthetic resins include polystyrene foam, polyethylene foam, rigid polyurethane foam, flexible polyurethane foam, rigid vinyl chloride foam, urea foam, phenolic foam, acrylic foam, cellulose acetate foam, and other resins.

In the present example, the raised portions at the end 10 are completely coated with the synthetic resin layer 5. However, the raised portions may be partially exposed such as to maintain the substantially smoothness of the surface. To the contrary, the synthetic resin layer 5 may be thickened and coat such that the outer surface is located outside the raised portions.

As shown in Fig. 2, at the receiver opening 4, the second end 11 is provided, on the outer periphery thereof, with a conduit member 7 that is larger in diameter than the spirally waved synthetic resin conduit 1B. A synthetic resin layer 8 is filled to coat also a gap between the conduit member 7 and the spirally waved synthetic resin conduit 1B so as to completely hide the conduit member 7. The cylindrical portion projecting axially outward has the inner peripheral surface that is substantially smooth in the axial direction. This inner peripheral surface serves as a receiving surface 40 for the inserted opening 3 that is inserted into the cylindrical portion.

Similarly to the inserted opening 3, the receiver opening 4 is formed such that the second end 11 and the conduit member 7 are surrounded with a molding tool and a synthetic resin material is injected thereinto and cured. In other modes, the synthetic resin layer 8 can be separately formed so as to incorporate the conduit member 7 and be attached to the end 11 so as to be integrated together by heat sealing or the like, or the synthetic resin layer 8 can be coated by any other method. Examples of the material for the synthetic resin layer 8 include synthetic resin materials same as those for the inserted opening 3.

Similarly to the spirally waved synthetic resin conduits 1A and 1B, the conduit member 7 has a waved conduit portion provided continuously with raised portions and recessed portions each of which has a substantially triangular shape, a substantially arc shape, or a trapezoidal shape. Provision of the conduit member 7 considerably increases the strength of the receiver opening 4.

In the present example, the conduit member 7 has such a waved conduit portion configured similarly to the spirally waved synthetic resin conduits 1A and 1B. However, the present invention is not limited to this configuration. The conduit member 7 may have a cross section provided with the recess 23 at each of the tops of the raised portions as shown in Fig. 3(b) in the spirally waved synthetic resin conduit 1B having the conduit wall 2 shown in Fig. 3(a). To the contrary, the conduit member 7 may not have any recess at each of the tops of the raised portions as shown in Fig. 3(a) in the spirally waved synthetic resin conduit 1B having the conduit wall 2 shown in Fig. 3(b). Otherwise, as shown in Fig. 4, it is possible to use a conduit member 7A having a straight conduit portion.

It is noted that, in the example shown in Fig. 4, the straight conduit portion has an inner peripheral surface provided with engaging projections 70 that are engaged respectively with the raised portions on the conduit wall 2. These engaging projections 70 serve as retainers and increase the strength of the receiver opening 4.

Such a conduit member 7 (7A) is used primarily for maintaining the strength of the cylindrical portion that is projected outward at the receiver opening 4 and receives the inserted opening 3. Alternatively, by selecting a size and a material so as to maintain the strength, the receiver opening 4 can be configured only by the synthetic resin layer 8 and is not provided with any inserted member such as the conduit member 7. The conduit member 7 (7A) and the outer peripheral surface of the conduit wall 2 are rigidly integrated with each other by the synthetic resin layer 8 that is interposed therebetween. The synthetic resin layer 8 configuring the receiver opening 4 may be increased in strength by embedding a reinforcing material such as reinforcing fibers or a net, as necessary.

More specifically, as shown in Fig. 2, in a case of reinforcing the outer peripheral surface of the receiver opening 4 at the connection end, the outer peripheral surface can be provided with an FRP layer 8a.

The FRP layer 8a is formed by impregnating reinforcing fibers with a synthetic resin material. Such reinforcing fibers may be formed into a woven fabric or a nonwoven fabric, and examples thereof include glass fibers, carbon fibers, aramid fibers, and boron fibers.

As an example, it is possible to use a chopped strand mat as an FRP glass fiber base, which is formed into a tape or sheet shape, with a coating weight in a preferable range from 100 to 300 g/m². Otherwise, it is possible to use an FRP plain woven glass cloth or a glass cloth tape at a density in a preferable range of 16 to 25 warp yarns and 15 to 23 weft yarns per 25 mm. The weaving method is not limited to plain weave, but examples thereof include twill weave, sateen weave, and leno weave. It is noted that the tape shape mentioned above is obtained by preliminarily cutting into a shape of a tape.

In a case where the synthetic resin layer 8 is formed by injecting a foamed synthetic resin, the reinforcing fibers are impregnated with the synthetic resin in the foaming process of the foamed synthetic resin within a molding tool. The foamed synthetic resin is then cured into the FRP layer 8a.

In another case where the synthetic resin layer 8 is made of a non-foamed synthetic resin, the synthetic resin layer 8 is separately formed so as to incorporate the conduit member 7, and is attached to the end 11 to be integrated with each other by heat sealing or the like. An FRP sheet, which is obtained by preliminarily impregnating reinforcing fibers with the synthetic resin and applying compression molding, is then attached to the outer peripheral surface of the receiver opening thus formed, by means of an adhesive agent or the like, so that the FRP layer 8a can be formed.

In this case, the FRP layer 8a can be obtained with a plurality of stacked FRP sheets. The FRP sheets stacked so as to alternate the directions of the fibers improve tensile strength in respective directions as well as stabilize and increase impact resistance.

With the outer peripheral surface of the receiver opening 4 at the connection end being reinforced by the FRP layer 8a described above, even when a large and long spirally waved synthetic resin conduit having an inner diameter of 1000 mm or more and a length of approximately 5 m is unloaded from a bed of a truck with use of a forklift and the conduit is dropped, the end of the conduit can be protected from damages.

The FRP layer 8a, which can reinforcing the outer peripheral surface of the receiver opening 4 at the connection end, is also usable at the inserted opening 3.

More specifically, the outer peripheral surface of the inserted opening 3 at the connection end can be provided with an FRP layer 5a that is configured identically to the FRP layer 8a described above. The inserted opening 3, of which the outer peripheral surface at the connection end is thus reinforced by the FRP layer 5a, can be also protected from damages, similarly to the receiver opening 4.

It is noted that, the spirally waved synthetic resin conduit is more likely to be dropped from the end provided with the receiver opening 4, because the receiver opening 4 is heavier than the inserted opening 3 due to the difference in configuration between the receiver opening 4 and the inserted opening 3. Accordingly, the outer peripheral surface of the receiver opening 4 at the connection end is essentially provided with the FRP layer 8a, while the FRP layer 5a may be arbitrarily provided at the inserted opening 3.

In the present embodiment, each of the inserted opening 3 and the receiver opening 4 is formed in a substantially smooth shape in the axial direction. However, the present invention is not necessarily limited to such a straight shape. The inserted opening 3 may be formed into a tapered shape with the diameter being gradually reduced toward the opening end, and the receiver opening 4 may be configured to have the inner peripheral surface tapered so as to be substantially in parallel and almost identically angled with the tapered inserted opening 3. Otherwise, the outer diameter portion of the inserted opening or the inner diameter portion of the receiver opening may have curved lines in the axial direction with variation in size of the outer or inner diameter.

Furthermore, an O-ring 6 serving as a sealing member is interposed between the inserted opening 3 and the receiver opening 4. More specifically, the outer surface of the inserted opening 3 is provided with an annular groove 50 into which the O-ring 6 is fitted. The conduits are connected to each other with the O-ring 6 being fitted in the annular groove 50.

In the present example, the annular groove 50 for allowing the O-ring 6 to be fitted therein is formed by cutting out the edge of the distal end of the inserted opening 3. Alternatively, the annular groove may be formed at the edge of the opposite proximal end or at an intermediate portion of the inserted opening 3. Still alternatively, the annular groove may be provided in the receiver opening 4. The shape and the configuration of the sealing member such as the O-ring 6 is not particularly limited as long as the gap between the inserted opening 3 and the receiver opening 4 can be securely sealed. Any one of sealing members having various shapes and configurations can be attached at an appropriate position. In place of the O-ring 6 to be independently attached, a circular projection can be integrally formed preliminarily as a sealing portion.

### 2. Second Embodiment

Described next is a second embodiment of the present invention with reference to Figs. 5 and 6.

In the present embodiment, the synthetic resin layer 8 is coated such that the conduit member 7 configuring the receiver opening 4 is partially exposed. The conduit member is embedded in the synthetic resin layer 8 at the distal end where the strength is particularly required as well as at the proximal end that is important in terms of integration with the conduit wall 2. The remaining intermediate portion of the conduit member is exposed.

Such exposure of the conduit member 7 realizes the reduction in weight and material cost. Moreover, in such a case as in the present example where the conduit member 7 and the conduit wall 2 have the same outer structures, the exposed portion of the receiver opening 4 and the conduit wall 2 have the same outer appearance, which enhances the degree of integration in terms of outer appearance between the coupling portions and the entire conduits, thereby resulting in the improvement of the quality in outer appearance. Other configurations and modifications are basically similar to those of the first embodiment. Therefore, portions having the same configurations are denoted by same symbols and description thereof is not repeated.

It is noted that, in the figure, symbol 8a denotes the FRP layer formed to reinforce the outer peripheral surface of the receiver opening 4 at the connection end.

### 3. Third Embodiment

Described next is a third embodiment with reference to Figs. 7 and 8.

In the present embodiment, in place of the conduit member 7 configuring the receiver opening 4, a synthetic resin portion (the synthetic resin layer 8) of the receiver opening 4 includes reinforcing fibers 7B. In the present example, the reinforcing fibers 7B are embedded as a woven fabric or a nonwoven fabric of the reinforcing fibers, or as a compact of the reinforcing fibers cured with a resin. Such a configuration achieves the significant reduction in weight and cost in comparison to the configuration including the embedded conduit member 7, while realizing substantially equal increase in strength. In the present embodiment, the recess 23 shown in Fig. 3(b) is provided at the top of each reinforcing convex portion 21 of the conduits. This configuration is obviously applicable to various types of waved synthetic resin conduits, similarly to the first embodiment.

Preferable reinforcing fibers are fiberglass or glass fibers. Upon forming the receiver opening 4 with use of a synthetic resin, a woven fabric, a nonwoven fabric, or a resin compact of the reinforcing fibers 7B are preliminarily placed in a molding tool, so that the reinforcing fibers are embedded in the molded body. In another method, the receiver opening 4 is formed in two steps, namely, formation of the inner portion and formation of the outer portion. Upon completion of the first formation of the inner portion, the woven fabric, the nonwoven fabric, or the resin compact of the reinforcing fibers 7B is attached onto the outer surface. The reinforcing fibers can be embedded by the second formation thereon.

The woven fabric, the nonwoven fabric, or the resin compact of the reinforcing fibers 7B may be incorporated in the receiver opening 4 along the substantially entire periphery, or may be incorporated so as to be partially provided therein. The number of the woven fabrics, the nonwoven fabrics, or the resin compacts may be one or plural. The resin compact to be incorporated may be formed into a sheet or cylindrical shape. The resin used in the resin compact is preferably the same as that of the synthetic resin layer 8 configuring the receiver opening 4 in terms of adhesiveness. Otherwise, the woven fabric, the nonwoven fabric, or the resin compact of the reinforcing fibers 7B may be attached onto the outer surface of the receiver opening 4.

It is noted that, in the figures, symbol 8a denotes the FRP layer formed to reinforce the outer peripheral surface of the receiver opening 4 at the connection end.

Fig. 8 shows an example where the reinforcing fibers 7B are included also in the synthetic resin layer 5 at the inserted opening 3, similarly to the receiver opening 4. In this case also, a woven fabric, a nonwoven fabric, or a resin compact of the reinforcing fibers 7B is preliminarily placed in the molding tool, so that the reinforcing fibers can be embedded in the molded body. The conduit can be obviously configured such that the inserted opening 3 includes the reinforcing fibers 7B as in the present example and the receiver opening 4 incorporates the conduit member 7 of the first embodiment in place of the reinforcing fibers 7B, or no reinforcing member is inserted in the receiver opening.

Described in the present example is the example of incorporating, in the receiver opening 4 or in the inserted opening 3, a woven fabric, a nonwoven fabric, or a resin compact of the reinforcing fibers 7B. There are still other preferred examples. Specifically, as shown in Fig. 9, reinforcing fiber chips 7C (obtained by cutting fibers into small pieces) are blended into the synthetic resin material used for forming the inserted opening 3 or the receiver opening 4, so as to include the chips in the entire synthetic resin portion, which enhances the strength in the entire resin portion. As shown in Fig. 10, the reinforcing fiber chips can be included in combination with a woven fabric, a nonwoven fabric, or a resin compact of the reinforcing fibers 7B described above, which achieves further increase in strength. Other configurations and modifications (such as the position of the O-ring) are basically similar to those of the first embodiment. Therefore, portions having the same configurations are denoted by same symbols and description thereof is not repeated.

In Figs. 9 and 10, symbol 8a denotes the FRP layer that is formed to reinforce the outer peripheral surface of the receiver opening 4 at the connection end.

### 4. Fourth Embodiment

Described next is a fourth embodiment with reference to Figs. 11 to 16.

As shown in Figs. 11 and 12, each of spirally waved synthetic resin conduits 1C according to the present embodiment has a conduit wall 2 formed in a spirally waved shape. A first end (left end in the figure) of the conduit is provided with a cylindrical inserted opening 3 by coating, with a synthetic resin layer 5, concave portions that form the waved shape on the outer surface of at least the first end. A second end 102a (right end in the figure) is provided with a cylindrical receiver opening 4 having a synthetic resin layer 8, which coats the outer surface of the second end and is extended axially outward. When the plurality of spirally waved synthetic resin conduits 1C are connected to each other, the inserted opening 3 of the first (right in the figure) spirally waved synthetic resin conduit 1C is inserted to the receiver opening 4 of the second (left in the figure) spirally waved synthetic resin conduit 1C.

In the present invention, as shown in the vertical sectional view of Fig. 13, the receiver opening 4 is particularly configured such that a conduit member 7 provided coaxially and being larger in diameter than the spirally waved synthetic resin conduit 1C projects outward in the axial direction from the outer surface of the second end 102a, and such that a synthetic resin material for the synthetic resin layer 8 is filled at least in a gap between the conduit member 7 and the spirally waved synthetic resin conduit 1C.

As shown in Fig. 13, the conduit wall 2 has a waved shape by being provided continuously with raised portions and recessed portions each of which has a substantially triangular shape, a substantially arc shape, or a trapezoidal shape. Each part including a recessed portion between adjacent raised portions configures a concave portion. In the present example, a synthetic resin main body 20 having a substantially smooth inner surface is provided, on the outer periphery thereof, with a spirally placed reinforcing convex portion 21 that has a substantially triangular shape or a substantially arc shape and is made of a resin compact incorporating a steel member 22 (such as a coated steel plate).

Alternatively, the reinforcing convex portion 21 may be made only of a resin layer, without incorporating the steel member 22. The shape of each of the raised portions and the recessed portions is not particularly limited, but may be in a substantially V-letter shape, a substantially U-letter shape, a substantially circular shape, a substantially elliptical shape, a substantially rectangular shape, a polygonal shape, an irregular shape, or any other shape. Further, in the present example, the main body 20 is provided on the inner peripheries of the raised portions so as to be extended from the recessed portions. Therefore, the inner surface of the conduit is formed into a smooth shape by the main body 20. Alternatively, the main body 20 may not be provided and the reinforcing convex portion 21 may be placed continuously, so that the inner surface is formed uneven into the spirally waved shape.

In a preferred example, the steel member 22 is configured such that a recess 23 is provided at the top of each of the raised portions. The recesses 23 thus provided disperse pressure (pressure by soil or the like) applied to the raised portions, thereby resulting in increases of the strength and rigidity of the raised portions, as well as of the pressure resistance of the entire conduit wall 2. In the present example, the outer surface of the steel member 22 is further coated with an outer surface layer 24. The raised portions and the recessed portions of the conduit wall 2, more specifically, the main body 20 and the outer surface layer 24 can be each made of a synthetic resin material selected from a wide variety of synthetic resins of polyolefin series such as polyethylene and polypropylene, of vinyl chloride series, and the like. Other than the above, a synthetic rubber or a soft resin can be used.

As shown in Figs. 12 and 13, the inserted opening 3, which is provided at the first end of the spirally waved synthetic resin conduit, is coated with the synthetic resin layer 5 such that the concave portions shaping the waved outer surface of at least the first end are filled with the synthetic resin layer 5, and has the outer surface in a substantially smooth cylindrical shape in the axial direction. Accordingly, the inserted opening 3 is shaped so as to be in close contact with the inner peripheral surface of the receiver opening 4 at the second end. In the present example, the synthetic resin layer 5 configuring the inserted opening 3 is formed such that the first end is surrounded with a molding tool and a synthetic resin material is injected thereinto and cured. Alternatively, the synthetic resin layer 5 can be coated by any other method. The synthetic resin material for the synthetic resin layer 5 may be foamed or not formed, and examples of such synthetic resins include olefinic resins such as polyethylene resin and polypropylene resin. Examples of foamed synthetic resins include polystyrene foam, polyethylene foam, rigid polyurethane foam, flexible polyurethane foam, rigid vinyl chloride foam, urea foam, phenolic foam, acrylic foam, cellulose acetate foam, and other resins.

As shown in the vertical sectional view of Fig. 13, the receiver opening 4 at the second end is provided coaxially with the conduit member 7 that is larger in diameter than the spirally waved synthetic resin conduit 1C so as to project axially outward from the outer surface of the second end 102a. The synthetic resin material for the synthetic resin layer 8 is filled at least in the gap between the conduit member 7 and the spirally waved synthetic resin conduit 1C. The cylindrical portion projecting axially outward has the inner peripheral surface that is substantially smooth in the axial direction. This inner peripheral surface serves as a receiving surface 40 for the inserted opening 3 that is inserted into the cylindrical portion. Examples of the material for the synthetic resin layer 8 at the receiver opening 4 include synthetic resin materials same as those for the inserted opening 3.

In the present embodiment, each of the inserted opening 3 and the receiver opening 4 is formed in a substantially smooth shape in the axial direction. However, the present invention is not necessarily limited to such a straight shape. The inserted opening 3 may be formed into a tapered shape with the diameter being gradually reduced toward the opening end, and the receiver opening 4 may be configured to have the inner peripheral surface tapered so as to be substantially in parallel and almost identically angled with the tapered inserted opening 3. Otherwise, the outer diameter portion of the inserted opening or the inner diameter portion of the receiver opening may have curved lines in the axial direction with variation in size of the outer or inner diameter.

Still alternatively, the receiving surface 40 of the receiver opening 4 is preferably formed into a reversely tapered shape so as to be reduced in diameter from the inner end toward the outer opening end, which realizes watertight and tight properties of the O-ring 6 at the inserted opening 3. The opening end of the receiver opening 4 is provided with a stepped tapered portion 42, so that the O-ring 6 is not caught at the opening of the receiver opening and disengaged when the inserted opening 3 is inserted.

Similarly to the spirally waved synthetic resin conduit 1C, the conduit member 7 to be incorporated in the receiver opening 4 has a waved conduit portion provided continuously with raised portions and recessed portions each of which has a substantially triangular shape, a substantially arc shape, or a trapezoidal shape. Provision of the conduit member 7 considerably increases the strength of the receiver opening 4. The present example adopts the conduit member that has a conduit wall 71 in a spirally waved shape and is thus waved similarly to the spirally waved synthetic resin conduit 1C (however, no main body 20 is provided on the inner periphery). Accordingly, the same symbol is applied and detailed description thereof is not repeated. However, the present invention is not limited to a conduit member in such a mode.

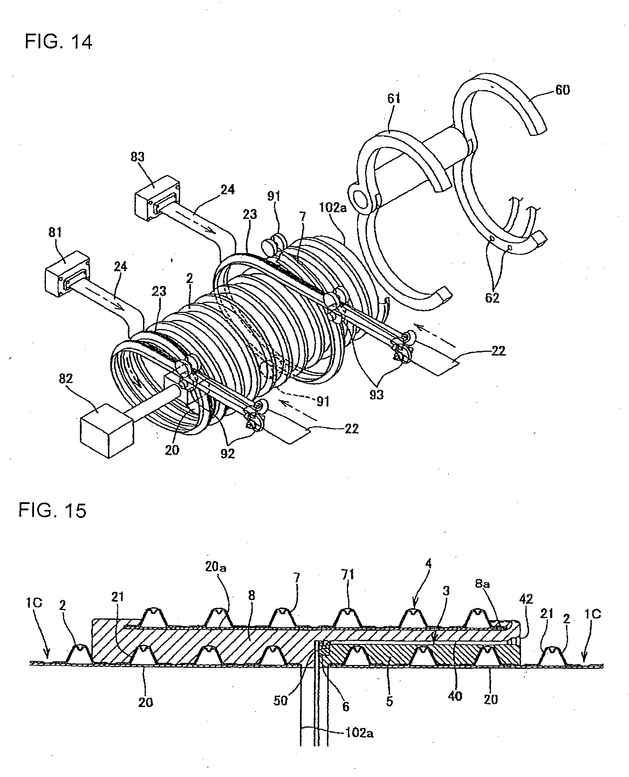

The conduit member 7 is preferably modified by providing a main body 20a on the inner periphery, as shown in Fig. 15. The conduit member 7 and the outer peripheral surface of the conduit wall 2 are rigidly integrated with each other by the synthetic resin layer 8 that is interposed therebetween.

The synthetic resin layer 8 is coated such that the conduit member 7 is partially exposed. The conduit member is embedded in the synthetic resin layer 8 at the distal end where the strength is particularly required as well as at the proximal end that is important in terms of integration with the conduit wall 2. The remaining intermediate portion of the conduit member is exposed. Such exposure of the conduit member 7 realizes the reduction in weight and material cost. Moreover, in such a case as in the present example where the conduit member 7 and the conduit wall 2 have the same outer structures, the exposed portion of the receiver opening 4 and the conduit wall 2 have the same outer appearance, which enhances the degree of integration in terms of outer appearance between the coupling portions and the entire conduits, thereby resulting in the improvement of the quality in outer appearance.

As shown in Fig. 13, the O-ring 6 serving as a sealing member is interposed between the inserted opening 3 and the receiver opening 4. More specifically, the outer surface of the inserted opening 3 is provided with an annular groove 50 into which the O-ring 6 is fitted. The conduits are connected to each other with the O-ring 6 being fitted in the annular groove 50. In the present example, the annular groove 50 for allowing the O-ring 6 to be fitted therein is formed by cutting out the edge of the distal end of the inserted opening 3. Alternatively, the annular groove may be formed at the edge of the opposite proximal end or at an intermediate portion of the inserted opening 3. Still alternatively, the annular groove may be provided in the receiver opening 4. The shape and the configuration of the sealing member such as the O-ring 6 is not particularly limited as long as the gap between the inserted opening 3 and the receiver opening 4 can be securely sealed. Any one of sealing members having various shapes and configurations can be attached at an appropriate position. In place of the O-ring 6 to be independently attached, a circular projection can be integrally formed preliminarily as a sealing portion. The outer surfaces of the spirally waved synthetic resin conduit 1C, including the inserted opening 3 and the receiver opening 4 at the respective ends may be provided with a coating agent that improves waterproof, weatherproof, and chemical resistances.

Similarly to the first embodiment described above, the inserted opening in any one of the second to fourth embodiments can be provided with an FRP layer 5a on the outer peripheral surface at the connection end.

In the above first to fourth embodiments, the FRP layer is provided at the connection end on the outer peripheral surface of the receiver opening as well as at the connection end on the outer peripheral surface of the inserted opening. Alternatively, the FRP layer can be provided partially or entirely on the connection end surface of the receiver opening or on the connection end surface of the inserted opening.

In such a case where the FRP layer is provided continuously from the outer peripheral surface to the end surface, the outer peripheral corner of the receiver opening at the connection end can be more securely reinforced.

### 5. Method for manufacturing spirally waved synthetic resin conduit

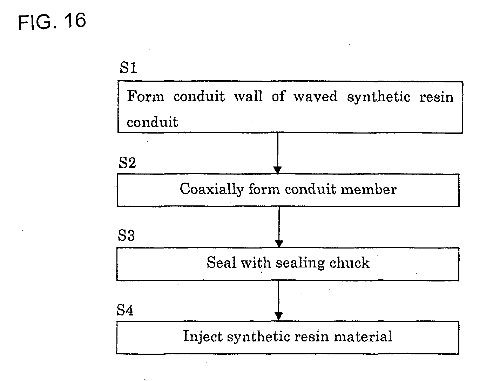

Described next is a method for manufacturing the spirally waved synthetic resin conduit 1C with reference to Figs. 14 and 16.

As shown in Fig. 16, the manufacturing processes for the spirally waved synthetic resin conduit 1C include the following steps S1 to S4. In step S1, the conduit wall 2 of the spirally waved synthetic resin conduit 1C is formed. Subsequently in step S2, the conduit member 7 larger in diameter than the spirally waved synthetic resin conduit is formed coaxially at the second end 102a of the formed spirally waved synthetic resin conduit 1C. In step S3, the inner and the outer ends in the axial direction of the formed conduit member 7 are sealed with sealing chucks 60 and 61, respectively. In step S4, the synthetic resin material for the synthetic resin layer 8 is injected into the gap between the conduit member 7 sealed with the sealing chucks and the conduit wall 2 of the spirally waved synthetic resin conduit.

In step S1, the conduit wall 2 can be formed in a conventional method for forming a spirally waved synthetic resin conduit. As shown in Fig. 14, the steel member 22 continuously supplied is deformed into an M-letter shape in cross section by processing rolls 92. The deformed steel member is then fed into a spiral shape, while an outer winding tape (the outer surface layer 24) being continuously fed from a mouth ring 81 also into a spiral shape so as to be attached onto the outer surface of the steel member, and an inner winding tape (the main body 20) being continuously fed from a mouth ring 82 into a spiral shape so as to be attached onto the inner surface. These members are integrally joined in the axial direction to configure the conduit wall 2. In the present example, the conduit member 7 is not formed at the end of the already formed conduit wall 2. Instead, subsequently to step S1, the formed conduit wall 2 is provided with the conduit member 7 formed in step S2, so that the receiver opening 4 is effectively formed.

The conduit member 7 is formed in step S2 in a manner similar to the formation of the conduit wall 2. Specifically, the steel member 22 continuously supplied is deformed into an M-letter shape in cross section by processing rolls 93. The deformed steel member is then fed into a spiral shape, while an outer winding tape (the outer surface layer 24) being continuously fed from a mouth ring 83 also into a spiral shape so as to be attached onto the outer surface of the steel member, with no inner winding tape being provided. These members are integrally joined in the axial direction to form the conduit member 7. The formed conduit member 7 is supported from radially outside by a plurality of guide rolls 91 serving as guide portions, so that the conduit member is supported coaxially with the conduit wall 2.

In step S3, the conduit wall 2 is surrounded, from outside, with a cylindrical outer frame (halved).

Further, reinforcing fibers are attached to form a ring shape, onto the inner wall of the body of the outer frame (corresponding to one of the ends of the conduit wall 2).

The sealing chucks 60 and 61 are attached respectively to the two ends of the conduit member 7 that has been coaxially formed, so as to tightly seal a space between the outer surface of the conduit wall 2 and the inner surface of the outer frame. Although not shown, the sealed space is provided by placing an inner frame used for forming the receiving surface 40 of the receiver opening 4 on the inner peripheral surface of the conduit member 7 that projects outward from the conduit wall 2.

Thereafter, in step S4, the synthetic resin material for the synthetic resin layer 8 is injected into the sealed space. In the present example, the synthetic resin material is injected through an injection port 62 that is axially in communication with the sealing chuck 60. However, the injection method is not necessarily limited to this case. Alternatively, the injection port may be provided in the sealing chuck 61 or a molding tool for the receiving surface 40.

The injected synthetic resin material is foamed and expanded to fill the space. The synthetic resin material having reached the inner surface of the outer frame proceeds and is impregnated into the reinforcing fibers that are attached on the inner wall of the outer frame. The foaming pressure increases the density, and the FRP layer is formed as a surface skin.

### 6. Evaluations on drop resistance of spirally waved synthetic resin conduit

The strength of the spirally waved synthetic resin conduits each provided with a coupling was evaluated by conducting drop tests under the following conditions similar to those in the unloading process on site. As a comparative example, spirally waved synthetic resin conduits each provided with a coupling, which do not include any FRP layer, were also evaluated by conducting drop tests.

### (a) Test pieces

Spirally waved synthetic resin conduits each provided with a coupling, of ϕ 1000 mm and 1350 mm long, and reinforced by incorporating a steel plate having a convex shape in cross section in the reinforcing convex portion configuring the spirally waved shape.

### (b) Receiver opening

A foamable resin was formed into a cylindrical shape, in a state where the outer peripheral surface of a spirally waved synthetic resin conduit component serving as a reinforcing member is partially exposed, so that the FRP layer was formed on the outer peripheral surface of the receiver opening at the connection end. Cured for three days.

### (c) Dropped sites

1. asphalt pavement surface
2. gravel pavement surface

### (d) Dropped height

3 m (drop angle of test pieces: 45 degrees inclined from the vertical direction)

### (e) No. of test pieces

3 pieces for tests on the asphalt pavement surface and 3 pieces for tests on the gravel pavement surface

### (f) Comparative example

Spirally waved synthetic resin conduits each provided with a coupling, which are configured identically with those described above, except that no FRP layer is provided, were prepared, namely, three pieces for tests on the asphalt pavement surface and three pieces for tests on the gravel pavement surface.

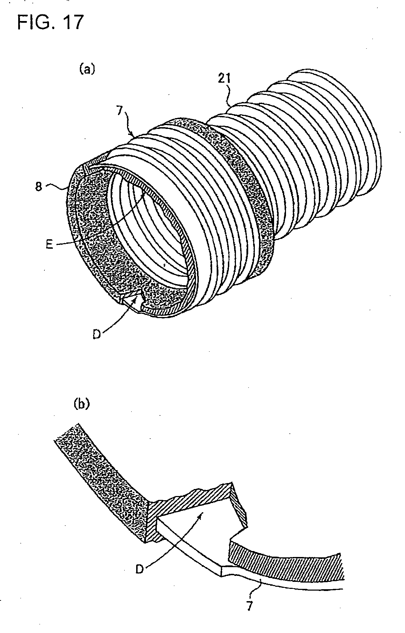

The drop resistance tests were conducted under these conditions. As shown in Fig. 17(a), the spirally waved synthetic resin conduits each provided with a coupling but not provided with the FRP layer had cracks in the outer peripheral surfaces of the receiver openings due to dropping both onto the asphalt pavement surface and onto the gravel pavement surface.

In particular, as shown in the enlarged view of Fig. 17(b), a missing portion D was provided at the position having directly hit the asphalt pavement surface or the gravel pavement surface and a crack was provided along the edge of the conduit member 7, with a result that the end of the conduit member 7 was exposed. In the figure, symbol E denotes such a broken surface.

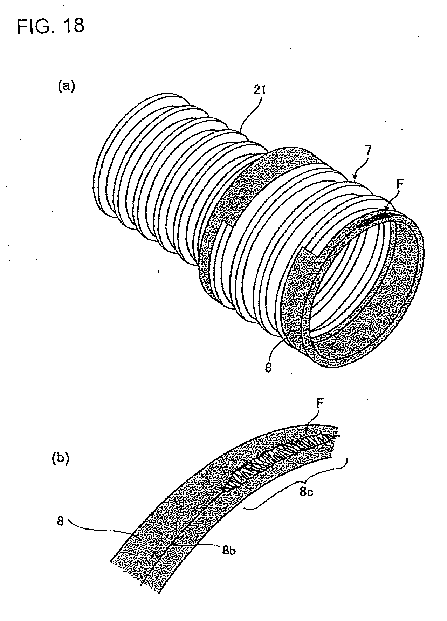

On the contrary, each of the spirally waved synthetic resin conduits provided with a receiver opening of the present invention did not cause any crack on the outer peripheral surface of the receiver opening by being dropped onto the asphalt pavement surface or onto the gravel pavement surface, although a friction scratch F with a slight concave was generated, as shown in Fig. 18(a).

Fig. 18(b) shows the enlarged friction scratch F. Although a line 8b following the edge of the outer peripheral surface of the receiver opening was lost across a region 8c, the strength thereof was not affected at all.

The embodiments of the present invention have been described. However, the present invention is not necessarily limited to these examples. The present invention can be apparently embodied in various modes within a scope not departing from the object of the invention.

### INDUSTRIAL APPLICABILITY

The synthetic resin conduit according to the present invention is applicable to an exhaust water pipe laid below a road, a large exhaust water pipe for a sewer, or the like.

### DESCRIPTION OF SYMBOLS

- 1A, 1B, 1C: spirally waved synthetic resin conduit
- 2: conduit wall
- 2a: concave portion
- 3: inserted opening
- 4: receiver opening
- 5: synthetic resin layer
- 5a: FRP layer
- 6: O-ring
- 7, 7A: conduit member
- 7B: reinforcing fiber
- 7C: reinforcing fiber chip
- 8: synthetic resin layer
- 8a: FRP layer
- 10, 11: end
- 20: main body
- 21: reinforcing convex portion
- 22: steel member
- 23: recess
- 24: outer surface layer
- 40: receiving surface
- 42: stepped tapered portion
- 50: annular groove
- 60, 61: sealing chuck
- 62: injection port
- 70: engaging projection
- 71: conduit wall
- 81, 82, 83: mouth ring
- 91: guide roll
- 92, 93: processing roll
- 102a: second end
- S: connection structure

## Claims

1. A spirally waved synthetic resin conduit provided with a coupling, the conduit comprising a receiver opening provided at an end of the conduit and connected to another spirally waved synthetic resin conduit, wherein
the receiver opening is formed with a foamable resin into a cylindrical shape so as to extend from the end of the spirally waved synthetic resin conduit in an axial direction of the conduit, and
an FRP layer is formed by impregnating reinforcing fibers with a resin, at least on an outer peripheral surface of the formed receiver opening at an connection end.

2. The spirally waved synthetic resin conduit provided with a coupling according to claim 1, wherein the FRP layer is provided further on an end surface of the receiver opening.

3. The spirally waved synthetic resin conduit provided with a coupling according to claim 1, wherein a reinforcing member is provided at the receiver opening.

4. The spirally waved synthetic resin conduit provided with a coupling according to claim 3, wherein as the reinforcing member, a spirally waved synthetic resin conduit component having an inner diameter larger than an outer diameter of the spirally waved conduit is embedded coaxially with the spirally waved synthetic resin conduit.

5. The spirally waved synthetic resin conduit provided with a coupling according to claim 3, wherein as the reinforcing member, a spirally waved synthetic resin conduit component having an inner diameter larger than an outer diameter of the spirally waved conduit is embedded coaxially with the spirally waved synthetic resin conduit, with an outer peripheral surface thereof being partially exposed.

6. The spirally waved synthetic resin conduit provided with a coupling according to claim 3, wherein as the reinforcing member, a circular conduit component having an inner diameter larger than an outer diameter of the spirally waved conduit is embedded coaxially with the spirally waved synthetic resin conduit.

7. The spirally waved synthetic resin conduit provided with a coupling according to claim 3, wherein as the reinforcing member, reinforcing fiber chips are embedded so as to be dispersed.

8. The spirally waved synthetic resin conduit provided with a coupling according to claim 3, wherein as the reinforcing member, a circular conduit component having an inner diameter larger than an outer diameter of the spirally waved conduit is embedded coaxially with the spirally waved synthetic resin conduit, and reinforcing fiber chips are embedded so as to be dispersed.

9. The spirally waved synthetic resin conduit provided with a coupling according to claim 1, wherein the reinforcing fibers are provided as a chopped strand mat, a plain woven glass cloth, etc. obtained by forming glass fibers into a tape or sheet shape.

10. The spirally waved synthetic resin conduit provided with a coupling according to claim 1, wherein the spirally waved portion is configured by stacking a steel plate formed spirally to have a convex shape in cross section and a synthetic resin coating the steel plate.

11. A connection structure between the spirally waved synthetic resin conduit provided with a coupling according to any one of claims 1 to 10 and a spirally waved synthetic resin conduit including an inserted opening configured to be inserted into the receiver opening of the spirally waved synthetic resin conduit provided with a coupling, wherein
the inserted opening is substantially same in length as the receiver opening extending in the axial direction of the conduit, and has a smooth outer peripheral surface so as to be engaged with the receiver opening.

12. The connection structure for the spirally waved synthetic resin conduit according to claim 11, wherein the inserted opening is formed to have the smooth outer peripheral surface by winding a belt-shaped resin having a convex shape in cross section along a spiral concave groove that is provided in the spirally waved synthetic resin conduit at a connection end, so as to be engaged with the spiral concave groove.

13. The connection structure for the spirally waved synthetic resin conduit according to claim 11, wherein the inserted opening is formed to have the smooth outer peripheral surface by filling a foamable resin in a spiral concave groove that is provided in the spirally waved synthetic resin conduit at a connection end.

14. The connection structure for the spirally waved synthetic resin conduit according to claim 11, wherein at least the outer peripheral surface of the inserted opening at a connection end is provided with an FRP layer by impregnating reinforcing fibers with a resin.

15. The connection structure for the spirally waved synthetic resin conduit according to claim 14, wherein the FRP layer is provided further on an end surface of the inserted opening.

16. The connection structure for the spirally waved synthetic resin conduit according to claim 14, wherein the reinforcing fibers are provided as a chopped strand mat or a plain woven glass cloth obtained by forming glass fibers into a tape or sheet shape, a plain woven glass cloth tape, carbon fibers, aramid fibers, or boron fibers.

17. The connection structure for the spirally waved synthetic resin conduit according to claim 11, wherein a circular conduit component having an inner diameter larger than an outer diameter of the spirally waved conduit is embedded in the inserted opening so as to be coaxial with the spirally waved synthetic resin conduit.

18. The connection structure for the spirally waved synthetic resin conduit according to claim 11, wherein reinforcing fiber chips are embedded so as to be dispersed in the inserted opening.

19. The connection structure for the spirally waved synthetic resin conduit according to claim 11, wherein a circular conduit component having an inner diameter larger than an outer diameter of the spirally waved conduit is embedded in the inserted opening so as to be coaxial with the spirally waved synthetic resin conduit, and reinforcing fiber chips are embedded so as to be dispersed in the inserted opening.

20. The connection structure for the spirally waved synthetic resin conduit according to claim 11, wherein a sealing member is provided at the inserted opening so as to seal a gap between the inserted opening and the receiver opening.
